# EUROPEAN PATENT APPLICATION

(11) **EP 2 701 336 A1**
(43) Date of publication of application: **26.02.2014**
(21) Application number: 12774476.1
(22) Date of filing: 19.04.2012
(51) Int. Cl.: H04L 7/08

(54) **TRANSMITTER CIRCUIT, INTERFACE CIRCUIT, INFORMATION TERMINAL, INTERFACE METHOD AND RECORDING MEDIUM**

(30) Priority: 22.04.2011 JP 2011095905
(71) Applicant: NEC CASIO Mobile Communications, Ltd., Kawasaki-shi Kanagawa 211-8666 (JP); NTT DOCOMO, INC., Chiyoda-ku Tokyo 100-6150 (JP)
(72) Inventor: MUTOU Takashi, Kawasaki-shi, Kanagawa 211-8666 (JP)
(74) Representative: Vossius & Partner
(86) International application number: PCT/JP2012/060601
(87) International publication number: WO 2012/144558

(57) **Abstract**

A signal received by an antenna (60) is inputted to an encoder (201) and to a discriminator (203). The discriminator (203) measures a length of a non-communication interval and outputs flag setting information when the length of the non-communication interval is greater than or equal to a predetermined interval length. The encoder (201) discriminates a synchronization pattern length based on the flag setting information. Referring to the flag at a time of generating a serial transmission frame, the encoder (201) sets the synchronization pattern length to be a first value when the flag has not been set and sets the synchronization pattern length to be a second value greater than the first value when the flag has been set. The encoder (201) generates a serial transmission frame with a synchronization pattern of the synchronization pattern length which has been set. A line driver (202) outputs the generated serial transmission frame.

## Description

### Technical Field

The present invention relates to a transmitter circuit, an interface circuit, an information terminal, an interface method, and a recording medium.

### Background Art

Recently, a standard called DigRF has been established in the field of communication terminals such as mobile phones. DigRF is a standard with regard to the interface between an RF-IC (Radio Frequency Integrated Circuit) device and a BB-IC (Base Band Integrated Circuit) device.

In the DigRF v4 (DigRF version 4) standards, a standard for a high speed communication mode is the one that performs a serial transmission of transmitting and receiving paths between the RF-IC device and the BB-IC device at 1248 Mbps respectively. In the DigRF v4 standard, a transmitting side IC and the receiving side IC internally generates a clock signal for the serial transmission respectively. Thus, it is possible that phases of the clocks on the transmitting side IC and the receiving side IC gradually shift due to the influence of heat and power supply noise generated from each of the IC devices.

For this reason, it is configured in the high speed communication mode of DigRF v4 that a synchronization pattern is added at the start of a frame transmitted by the transmitting side IC so that data following a SOF (Start of Frame) is normally transmitted and received by adjusting the phase of the internal clock of the receiving side IC while the receiving side IC receives the synchronization pattern.

In Patent Literature 1, an invention related to communication which conforms to the DigRF v3 (DigRF version 3) standard is disclosed. In the invention described in Patent Literature 1, a timing of receiving a next synchronization pattern is estimated based on a previous signal indicating the completion of reception of data. Then, a processing is performed in which, even when a pattern detected at the estimated timing does not completely match the synchronization pattern, the detected pattern is regarded as the synchronization pattern if there is a discrepancy in the number of bits that is less than or equal to a threshold value. Thus, it is described in Patent Literature 1 that detection errors of synchronization pattern data are suppressed.

### Citation List

### Patent Literature

Patent Literature 1: Unexamined Japanese Patent Application Kokai Publication No. 2010-154160.

### Summary of Invention

### Technical Problem

In the high speed communication mode of DigRF v4, when a state of a transmitting side IC is transitioned to a Stall state, in which an output of a frame is fixed during a non-communication time in order, for example, to reduce current consumption, there is a risk that an estimate of a timing of receiving a synchronization pattern becomes difficult and an error rate in detecting the synchronization pattern becomes high. When a receiving side fails in a re-synchronization, a throughput of user data will be reduced since the transmission frame is rejected and a retransmission processing is performed.

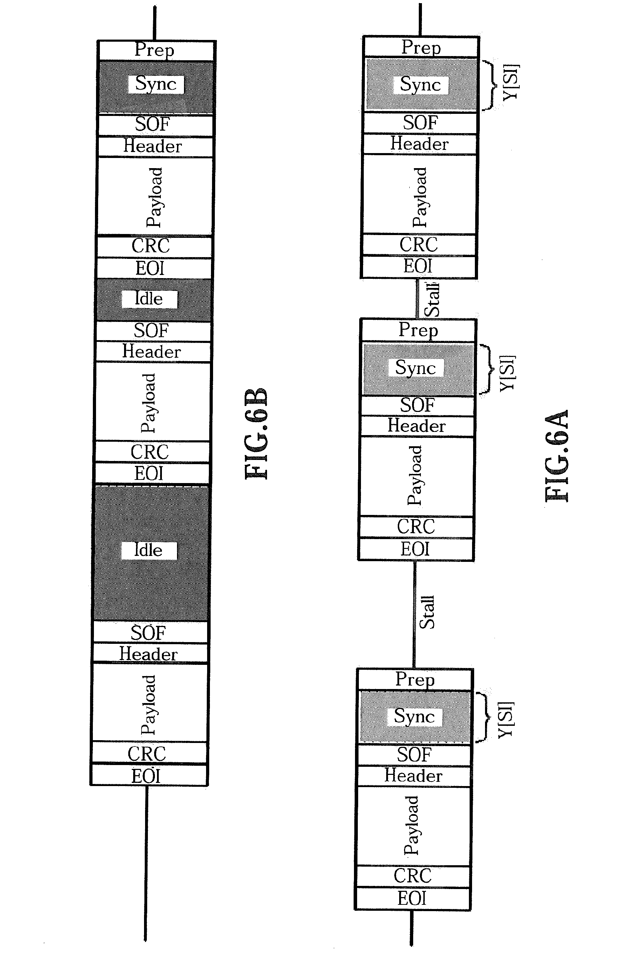

In addition, in order to reliably detect the synchronization pattern when returning from the Stall state (when resuming communication), there is a method of constantly lengthening the synchronization pattern as illustrated in FIG. 6A. However, a problem arises that lengthening the synchronization pattern increases overhead of the communication protocol and results in a drop in a throughput of user data.

Furthermore, in DigRF v4, as illustrated in FIG. 6B, there is a method in which in order to avoid out-of-synchronization due to phase shift of the clocks, CDR (Clock Data Recovery) is constantly operated through transmitting an idle pattern from a transmitting side without transitioning to the Stall state even during a non-communication time. Furthermore, there is another method in which an internal clock is constantly corrected at a receiving side based on such information as device temperature, though allowing a transition to the Stall state during a non-communication time. However, such a problem arises when these conventional methods are employed that a current consumption during the non-communication time increases since circuits are required to be constantly driven.

The present invention is in view of the above-described circumstances, and has an objective to provide a transmitter circuit, an interface circuit, an information terminal, an interface method, and a recording medium capable of avoiding a drop in transmission efficiency without increasing power consumption.

### Solution to Problem

In order to achieve the above-described objective, a transmitter circuit according to a first aspect of the present invention comprises:
a non-communication interval measurer for measuring a length of a non-communication interval;
a synchronization pattern length determiner for determining a synchronization pattern length based on the length of the non-communication interval measured by the non-communication interval measurer;
a frame generator for generating a frame with a synchronization pattern of the synchronization pattern length determined by the synchronization pattern length determiner; and
a frame transmitter for transmitting the frame generated by the frame generator after the non-communication interval.

An interface circuit according to a second aspect of the present invention is an interface circuit for performing serial transmission between an RF (Radio Frequency) circuit and a BB (Base Band) circuit, wherein
at least one of the RF circuit and the BB circuit provides a transmitter circuit comprising:
a non-communication interval measurer for measuring a length of a non-communication interval;
a synchronization pattern length determiner for determining a synchronization pattern length based on the length of the non-communication interval measured by the non-communication interval measurer;
a frame generator for generating a frame with a synchronization pattern of the synchronization pattern length determined by the synchronization pattern length determiner; and
a frame transmitter for transmitting the frame generated by the frame generator after the non-communication interval, and
the other of the RF circuit and the BB circuit provides a receiver circuit comprising:
   a frame receiver for receiving a frame transmitted by the frame transmitter;
   a clock generator for generating a clock;
   a clock phase adjuster for adjusting a phase of the clock based on the synchronization pattern added to the frame received by the frame receiver; and
   a frame reproducer for reproducing the received frame using the clock, the phase of which has been adjusted.

An information terminal according to a third aspect of the present invention is an information terminal comprising an RF (Radio Frequency) circuit and a BB (Base Band) circuit, wherein
at least one of the RF circuit and the BB circuit provides a transmitter circuit comprising:
a non-communication interval measurer for measuring a length of a non-communication interval;
a synchronization pattern length determiner for determining a synchronization pattern length based on the length of the non-communication interval measured by the non-communication interval measurer;
a frame generator for generating a frame with a synchronization pattern of the synchronization pattern length determined by the synchronization pattern length determiner; and
a frame transmitter for transmitting the frame generated by the frame generator after the non-communication interval, and
the other of the RF circuit and the BB circuit provides a receiver circuit comprising:
   a frame receiver for receiving the frame transmitted by the frame transmitter;
   a clock generator for generating a clock;
   a clock phase adjuster for adjusting a phase of the clock based on the synchronization pattern added to the frame received by the frame receiver; and
   a frame reproducer for reproducing the received frame using the clock, the phase of which has been adjusted.

An interface method according to a fourth aspect of the present invention comprises:
a non-communication interval measuring step for measuring a length of a non-communication interval;
a synchronization pattern length determining step for determining a synchronization pattern length based on the length of the non-communication interval measured at the non-communication interval measuring step;
a frame generating step for generating a frame with a synchronization pattern of the synchronization pattern length determined by the synchronization pattern length determining step;
a frame transmitting step for transmitting the frame generated by the frame generating step after the non-communication interval;
a frame receiving step for receiving the frame transmitted by the frame transmitting step;
a clock generating step for generating a clock;
a clock phase adjusting step for adjusting a phase of the clock based on the synchronization pattern added to the frame received by the frame receiving step; and
a frame reproducing step for reproducing the received frame using the clock, the phase of which has been adjusted.

A computer-readable recording medium according to a fifth aspect of the present invention stores a program which causes a computer to execute:
a non-communication interval measuring procedure for measuring a length of a non-communication interval;
a synchronization pattern length determining procedure for determining a synchronization pattern length based on the length of the non-communication interval measured by the non-communication interval measuring procedure;
a frame generating procedure for generating a frame with a synchronization pattern of the synchronization pattern length determined by the synchronization pattern length determining procedure; and
a frame transmitting procedure for transmitting the frame generated by the frame generating procedure after the non-communication interval.

### Advantageous Effects of Invention

According to the present invention, it is possible to avoid a drop in transmission efficiency without increasing power consumption.

### Brief Description of Drawings

FIG. 1 is a block diagram showing an internal configuration of an information terminal according to an embodiment;
FIG. 2 is a block diagram showing a configuration of a BB-IC device and a RF-IC device;
FIG. 3 is a diagram showing a configuration of a serial transmission frame which a line driver outputs;
FIG. 4 is a functional block diagram for explaining a configuration of a discriminator;
FIG. 5 is a flowchart showing a procedure of a synchronization pattern length discriminating processing;
FIG. 6A is a diagram for explaining a conventional serial transmission frame; and
FIG. 6B is a diagram for explaining a conventional serial transmission frame.

### Description of Embodiments

Hereinafter, embodiments of the present invention are described in detail with reference to the drawings.

An information terminal 1 according to the present embodiment is realized by a mobile phone, a PDA (Personal Digital Assistant), a smart-phone, a PC (Personal Computer) or the like and has a high-speed wireless communication function.

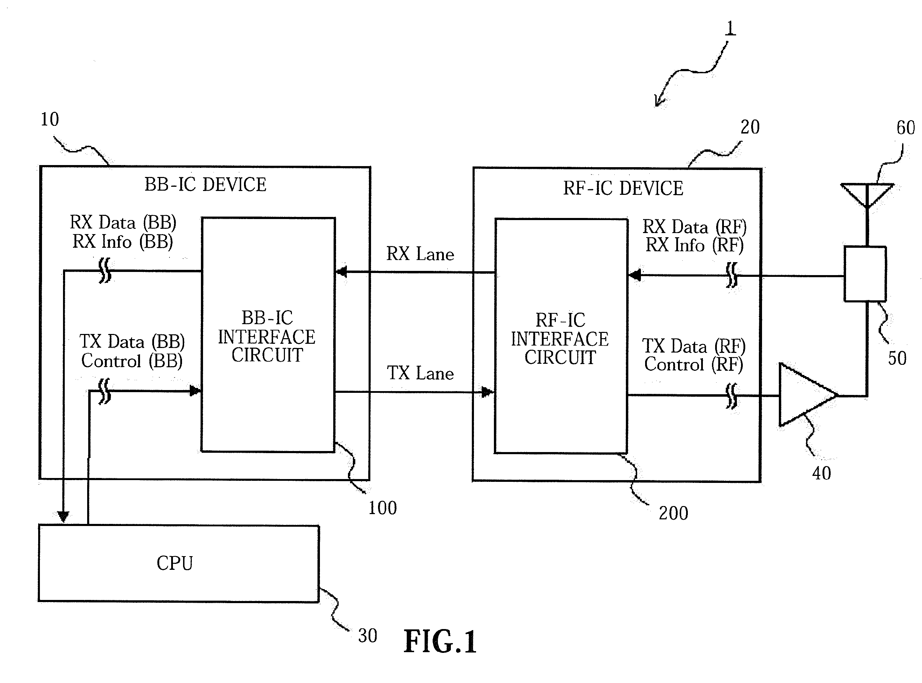

Among internal configurations of the information terminal 1, FIG. 1 shows interface portions of a BB-IC (Base Band Integrated Circuit) device and an RF-IC (Radio Frequency Integrated Circuit) device and associated potions thereof. However, in order to facilitate the understanding of the present embodiment, other components are omitted.

As shown in FIG. 1, the information terminal 1 comprises an antenna 60; the RF-IC device 20 which performs transmission and reception processing of radio signals received by the antenna 60; the BB-IC device 10 which performs modulation and demodulation processing of transmission and reception signals; a CPU 30 which performs an overall control of the information terminal 1 including a communication control; an amplifier 40 which amplifies a transmission signal; and a switch circuit 50 which switches between transmission and reception of the radio signals.

A signal flow during reception of the radio signal is roughly as follows; namely, first, the RF-IC device 20 receives a radio signal (RX Data (RF), RX Info (RF)) through the antenna 60 and the switch circuit 50, and outputs the signal to the BB-IC device 10. Next, the BB-IC device 10 performs processing such as demodulation on the reception signal received from the RF-IC device 20 to convert to a signal (RX Data (BB), RX Info (BB)) which the CPU 30 is able to process. Then, the CPU 30 extracts user data from the demodulated reception signal.

On the other hand, a signal flow during transmission of the radio signal is roughly as follows; namely, first, the BB-IC device 10 performs processing such as modulation on a transmission signal (TX Data (BB), Control (BB)) instructed to transmit by the CPU 30 to output the signal to the RF-IC device 20. Next, the RF-IC device 20 converts the signal received from the BB-IC device 10 to a signal (TX Data (RF), Control (RF)) which is able to be output from the antenna 60. The amplifier 40 amplifies the transmission signal converted by the RF-IC device 20. The transmission signal is transmitted by wireless transmission through the switch circuit 50 and the antenna 60.

Transmission and reception of signals between the BB-IC device 10 and the RF-IC device 20 (TX Lane, RX Lane) are performed using serial transmission. DigRF v4 described above has been established as the standard for the serial transmission.

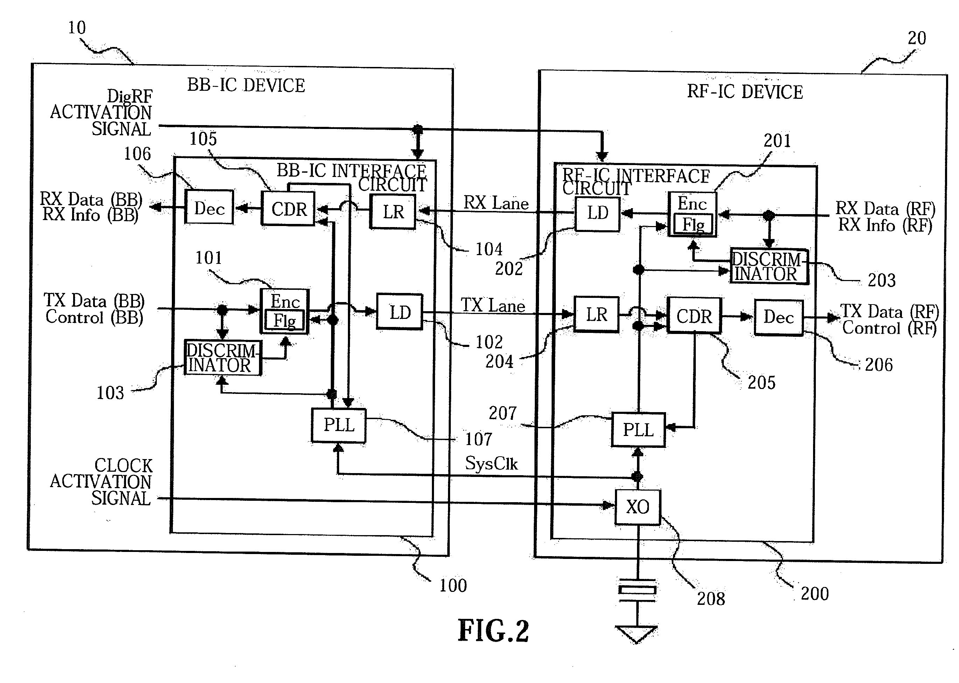

The BB-IC device 10 and the RF-IC device 20 respectively comprises a BB-IC interface circuit 100 and an RF-IC interface circuit 200 to realize the serial transmission conforming to DigRF v4. The configuration of the BB-IC interface circuit 100 and the RF-IC interface circuit 200 is described in detail with reference to FIG. 2. Note that, since the BB-IC interface circuit 100 and the RF-IC interface circuit 200 comprises a large amount of common configurations, common components are denoted by the same names and denoted by numbers having the same least significant digit in FIG. 2.

As shown in FIG. 2, the BB-IC interface circuit 100 comprises an encoder (Enc) 101, a line driver (LD) 102, a discriminator 103, a line receiver (LR) 104, a clock data recovery circuit (CDR) 105, a decoder (Dec) 106, and a PLL circuit 107.

In addition, the RF-IC interface circuit 200 comprises an encoder (Enc) 201, a line driver (LD) 202, a discriminator 203, a line receiver (LR) 204, a clock data recovery circuit (CDR) 205, a decoder (Dec) 206, a PLL circuit 207, and an oscillator (XO) 208.

The encoder 101 of the BB-IC interface circuit 100 encodes the transmission signal (TX Data (BB), Control (BB)) instructed to transmit by the CPU 30 to generate a serial transmission frame which conforms to a communication protocol of DigRF v4. The encoder 201 of the RF-IC interface circuit 200 encodes the received radio signal (RX Data (RF), RX Info (RF)) to generate a serial transmission frame which conforms to the communication protocol of DigRF v4.

The line drivers 102 and 202 output the serial transmission frames generated by the encoders 101 and 102.

The discriminators 103 and 203 measure the lengths of the non-communication intervals from the transmission and reception signals inputted to the encoders 101 and 201, discriminate whether or not the flags corresponding to the lengths of the synchronization patterns included in the serial transmission frames are set based on the obtained lengths of non-communication intervals, and output the discrimination results to the encoders 101 and 201. Details of processing performed by the discriminators 103 and 203 are described below.

The line receiver 104 receives the serial transmission frame outputted from the line driver 202. The line receiver 204 receives the serial transmission frame outputted from the line driver 102.

The clock data recovery circuits 105 and 205 respectively extract phase information from signal change points of the received serial transmission frames, adjust the phases of the clocks generated by the PLL circuits 107 and 207 to the phases indicated by the extracted phase information, and sample the serial transmission frames.

The decoders 106 and 206 respectively extract user data from the serial transmission frames sampled by the clock data recovery circuits 105 and 205, and decode and output the user data.

The PLL (Phase-Locked Loop) circuits 107 and 207 generate clocks required for each operation of the encoders 101 and 201, the discriminators 103 and 203, and the clock data recovery circuits 105 and 205 to output the clocks to respective circuits.

The oscillator 208 is provided only in the RF-IC device 20 and outputs to the PLL circuits 107 and 207 a signal having a predetermined oscillation frequency.

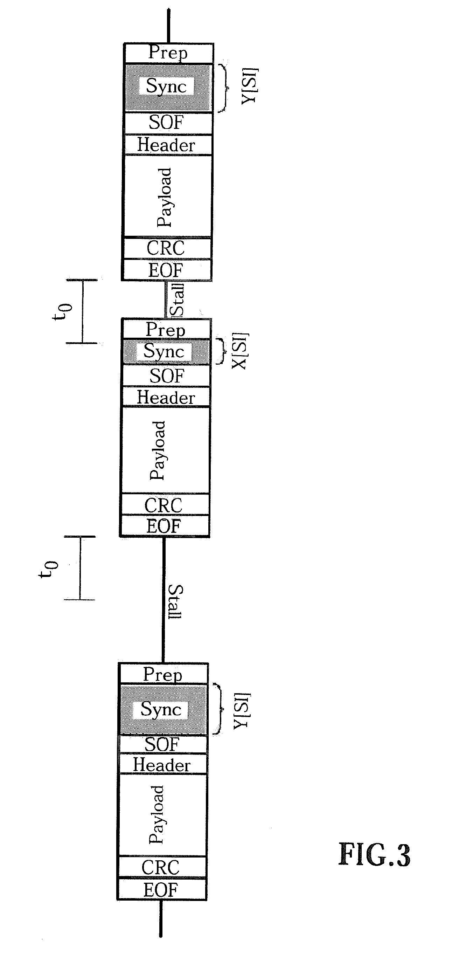

The signal flow between the BB-IC interface circuit 100 and the RF-IC interface circuit 200 of the information terminal 1 configured as described above is described in detail with reference to FIG. 2 and FIG. 3.

Communication methods which conform to the standard for the high-speed communication mode of DigRF v4 include a method of being in a Stall state in which the line drivers 102 and 202 output a fixed value during a non-communication time in which there are neither reception signals from the antenna 60 nor transmission signals from the CPU 30 and a method of constantly outputting an idle pattern during the non-communication time.

The present embodiment adopts the method of being in the Stall state in which the line drivers 102 and 202 output the fixed value during the non-communication time. Since only the PLL circuits 107 and 207 and the line receivers 104 and 204 are driven in the Stall state, it is possible to suppress power consumption. Intervals illustrated with "Stall" in FIG. 3 are the non-communication intervals.

First, a flow of the radio signal (RX Data (RF), RX Info (RF)) received through the antenna 60 is described in detail.

The radio signal (RX Data (RF), RX Info (RF)) received through the antenna 60 is inputted to the encoder 201. This reception signal is also inputted to the discriminator 203. The encoder 201 encodes the inputted reception signal to generate the serial transmission frame which conforms to the communication protocol of the DigRF v4 standard.

The serial transmission frame generated by the encoder 201 has a configuration as shown in FIG. 3. The serial transmission frame comprises, in order from the head thereof, a preamble part (Prep) which indicates a start of a frame transmission, a synchronization pattern (Sync) which is used to adjust the phase of the sampling clock at the receiving side, a Start Of Frame (SOF) which indicates the starting position of a frame, a Header which indicates sender and receiver addresses and subsequent data types, a Payload in which user data is stored, a CRC which is used to detect frame errors, and an End Of Frame (EOF) which indicates the end of the frame.

In the present embodiment, the synchronization pattern (Sync) has a pattern length according to the length of the non-communication interval. In other words, since there is a possibility that a phase shift of the clock become large when the non-communication interval is long, the synchronization pattern of a long pattern length is added so that the reliable sampling is performed by adjusting the phase of the clock. The synchronization pattern length is determined based on the discrimination result by the discriminator 203.

Specifically, when generating a serial transmission frame, the encoder 201 sets a flag which is referred to when the synchronization pattern length is determined. The flag is set to a predetermined value different from an initial value when the synchronization pattern length should be increased and is reset to the initial value when the synchronization pattern length should be decreased.

Note that, in the following description, to set the flag to the predetermined value (a first predetermined value, typically "1") is represented simply as "to set the flag" and to set the flag to an initial value (a second predetermined value, typically "0") is represented simply as "to reset the flag".

When it is discriminated that the synchronization pattern length should be increased since the non-communication interval of the reception signal is long, the discriminator 203 outputs to the encoder 201 a flag setting information indicating that the flag described above is to be set. The encoder 201 generates the serial transmission frame with the synchronization pattern of the synchronization pattern length which varies according to whether or not the flag has been set.

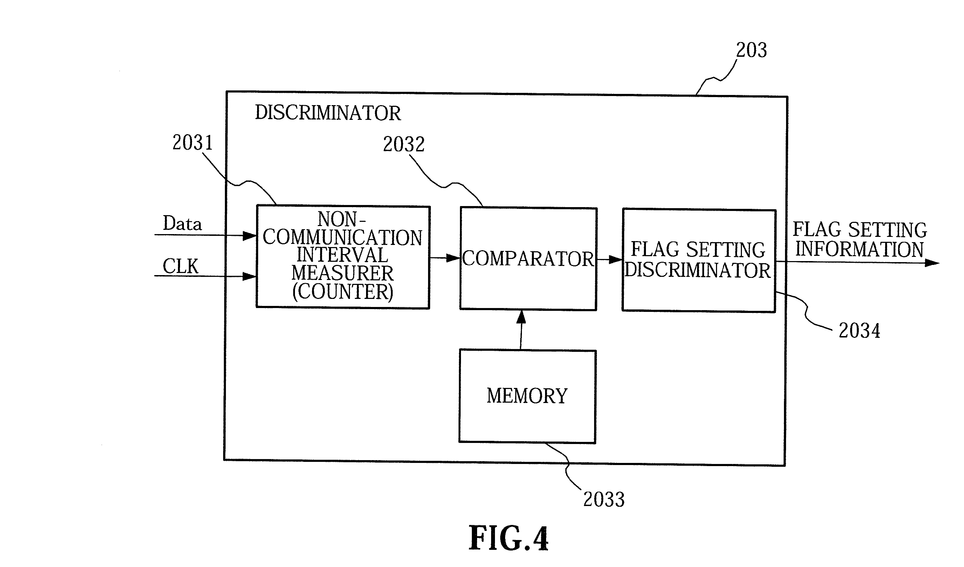

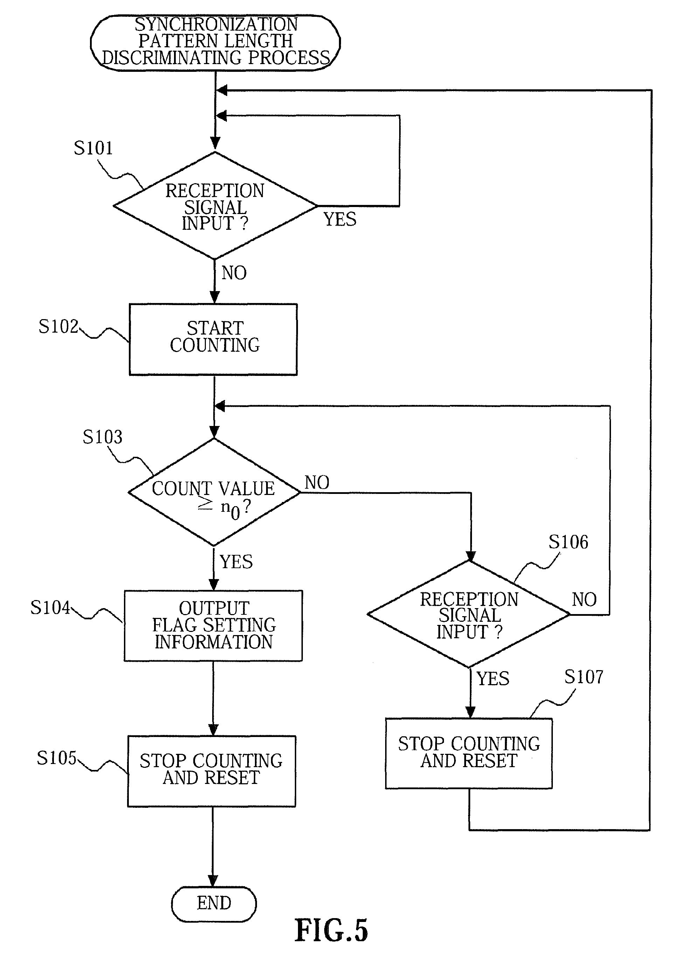

A discriminating processing of a synchronization pattern length executed by the discriminator 203 is described in detail with reference to FIG. 4 and FIG. 5. The discriminator 203 is configured to logic circuits, computing devices, or the like performing various calculations.

FIG. 4 is a functional block diagram for explaining a configuration of the discriminator 203 which discriminates the synchronization pattern length.

FIG 5 is a flowchart illustrating the synchronization pattern length discriminating processing performed by the discriminator 203 shown in FIG. 4. The synchronization pattern length discriminating processing is initiated when a reception signal is detected.

A non-communication interval measurer 2031 of the discriminator 203 measures a length of a non-communication interval. The non-communication interval measurer 2031 comprises a counter which counts up in response to the clock from the PLL circuit 207. When input of the reception signal is interrupted (step S101: NO), the non-communication interval measurer 2031 starts counting (step S102).

Specifically, the non-communication interval measurer 2031 constantly resets the counter when the reception signal (RX Data (RF)) is inputted and counts up when the reception signal is interrupted, that is, while in Stall state. The non-communication interval measurer 2031 continues counting up until a next reception signal is inputted (step S 102). Counting up is performed while the input of the reception signal is not interrupted (step S101: YES).

A count value measured by the non-communication interval measurer 2031 is inputted to a comparator 2032. The comparator 2032 compares the count value measured by the non-communication interval measurer 2031 and a reference count value no stored in a memory 2033 (step S 103). In other words, it is discriminated whether or not the length of the non-communication interval is greater than or equal to a predetermined interval. A comparison result by the comparator 2032 is inputted to a flag setting discriminator 2034.

When the count value is greater than or equal to no (step S103: YES), the flag setting discriminator 2034 outputs the flag setting information described above (step S104). Thereafter, the flag setting discriminator 2034 stops counting and resets (step S105).

When the count value is less than no (step S103: NO), the flag setting discriminator 2034 discriminates whether or not the reception signal is inputted (step S106). When detecting an input of the next reception signal before the count value reaches no (step S106: YES), the flag setting discriminator 2034 stops counting and resets (step S107), returning to the processing of step S101, thereafter.

The encoder 201 sets the flag when detecting the flag setting information outputted from the flag setting discriminator 2034.

The encoder 201 refers to the flag when generating the serial transmission frame based on the next reception signal. When the flag has not been set, it means that the count value is less than no and that the length of the non-communication interval is shorter than the length of the predetermined interval. The encoder 201 determines the synchronization pattern length to be a first value X[SI].

On the other hand, when the flag has been set, it means that the count value is greater than or equal to no and that the length of the non-communication interval is longer than the length of the predetermined interval. The encoder 201 determines the synchronization pattern length to be a second value Y[SI] (where X[SI] < Y[SI]).

Note that SI stands for Symbol Interval. [SI] is a unit indicating a data length in the interface method conforming to DigRFv4.

The encoder 201 generates the serial transmission frame, in which the synchronization pattern (Sync) having the synchronization pattern length determined by the above procedure is inserted after the preamble part (Prep), to output to the line driver 202. Note that the flag is reset when the serial transmission frame is generated.

The serial transmission frame outputted from the encoder 201 is outputted to the BB-IC interface circuit 100 by the line driver 202.

The outputted serial transmission frame is received by the line receiver 104 of the BB-IC interface circuit 100. The received serial transmission frame is inputted to the clock data recovery circuit 105.

The clock data recovery circuit 105 recognizes based on the preamble part (Prep) the fact that it has received the serial transmission frame. In addition, the clock data recovery circuit 105 extracts phase information from signal change points of the synchronization pattern (Sync) following the preamble part. The clock data recovery circuit 105 adjusts the phase of the clock of the PLL circuit 107 to the phase indicated by the phase information to sample the serial transmission frame.

Data sampled by the clock data recovery circuit 105 is decoded by the decoder 106. The user data is extracted from the decoded data by the decoder 106 to be outputted.

As described above, when a radio signal is received through the antenna 60, the user data is outputted to the CPU 30 via the RF-IC interface circuit 200 and the BB-IC interface circuit 100.

On the other hand, similarly to the flow of the reception signal (RX Data (RF), RX Info (RF)) received through the antenna, the transmission signal (TX Data (BB), Control (BB)) which the CPU 30 instructs to transmit is also outputted to the antenna 60 via the BB-IC interface circuit 100 and the RF-IC interface circuit 200 to be transmitted by wireless transmission.

In other words, similarly to the encoder 201 of the RF-IC interface circuit 200, the encoder 101 of the BB-IC interface circuit 100 generates the serial transmission frame with the synchronization pattern having the synchronization pattern length determined according to the length of the non-communication interval. At this time, the synchronization pattern length is determined based on the flag setting information outputted from the discriminator 103 which performs processing similar to the discriminator 203 as described above. Detailed description is omitted since it is similar to the flow of the reception signal described above.

As described above, according to the present embodiment, when the non-communication interval is short, phase shifts of the clocks inputted from the PLL circuit 107 of the BB-IC device 10 and the PLL circuit 207 of the RF-IC device 20 are small and the serial transmission frame with the synchronization pattern (Sync) having a short synchronization pattern length X[SI] is outputted from a transmitter circuit side (either the BB-IC device 10 or the RF-IC device 20). Thus, it is possible to raise transmission efficiency of user data especially when a large amount of the user data is continuously transmitted, for example.

On the other hand, when the length of the non-communication interval is greater than or equal to the predetermined length, it is possible that phase shifts of the clocks inputted from the PLL circuit 107 of the BB-IC device 10 and the PLL circuit 207 of the RF-IC device 20 are large, however, according to the present embodiment, a serial transmission frame with the synchronization pattern (Sync) having a long synchronization pattern length Y[SI] is outputted from a transmitter circuit side (either of the BB-IC device 10 and the RF-IC device 20). Thus, in a receiver circuit side (the other of the BB-IC device 10 and the RF-IC device 20), it is possible to perform re-synchronization reliably at a resumption of communication after a long non-communication interval, and it is possible to prevent a drop in transmission efficiency since loss and retransmission of serial transmission frames due to synchronization failures are avoided.

Furthermore, in the method in which a state of the transmitter circuit is transitioned to a Stall state during non-communication time, a frame overhead increases when the synchronization pattern is uniformly lengthened to ensure re-synchronization. However, according to the present embodiment, it is possible to avoid a drop in transmission efficiency due to an increase of the overhead. In other words, it is possible for the information terminal 1 according to the present embodiment to select a short synchronization pattern length depending on the length of the non-communication interval, to be transitioned to the Stall state without dropping transmission efficiency, and as a result, to reduce current consumption.

Thus, according to the present embodiment, by transmitting from the transmitter circuit side a serial transmission frame which allows the receiver circuit side to reliably perform re-synchronization at the resumption of communication, it is possible to avoid a drop in transmission efficiency without increasing power consumption.

Note that the present invention is not limited to the above embodiments, but various modifications are of course possible without departing from the spirit of the present invention.

For example, in the above-described embodiments, the discriminators 103 and 203 are allowed to determine a synchronization pattern length to output to the encoders 101 and 201 the determined synchronization pattern length or information indicating the synchronization pattern length instead of outputting the flag setting information.

In addition, instead of selecting a synchronization pattern length of either X[SI] or Y[SI], the encoders 101 and 201 are allowed to select anyone from among three or more synchronization pattern lengths depending on a length of a non-communication interval based on the flag setting information outputted from the discriminators 103 and 203.

Furthermore, by applying to an existing mobile phone or the like a program which performs processing equivalent to that performed by the encoders 101 and 201, the discriminators 103 and 203, and the line drivers 102 and 202 according to the above embodiments, it is also possible to allow the mobile phone or the like to function as the information terminal according to the present invention.

A distribution method of such a program is arbitrary. For example, it is allowed to be distributed by storing in a computer-readable recording medium such as a CD-ROM (Compact Disk Read-Only Memory), a DVD-ROM (Digital Versatile Disk ROM), an MO (Magneto Optical Disk), a memory card, and the like, or it is allowed to be distributed through a communication network such as a mobile phone network and the Internet.

In the above embodiments, the serial transmission of the DigRF standard between the RF-IC device and the BB-IC device is explained, however, it is also applicable to other various relay apparatus performing relaying by serial transmission. In other words, by transmitting a serial transmission frame with a synchronization pattern of a synchronization pattern length according to a length of a non-communication interval at a transmitter circuit side of such a relay apparatus, it is possible to reliably perform re-synchronization at a receiver circuit side and avoid a drop in transmission efficiency without increasing power consumption.

It is possible for some or all of the aforementioned embodiments to be also described as in the following notes without restriction thereto.

### (Note 1)

A transmitter circuit comprising:
a non-communication interval measurer for measuring a length of a non-communication interval;
a synchronization pattern length determiner for determining a synchronization pattern length based on the length of the non-communication interval measured by the non-communication interval measurer;
a frame generator for generating a frame with a synchronization pattern of the synchronization pattern length determined by the synchronization pattern length determiner; and
a frame transmitter for transmitting the frame generated by the frame generator after the non-communication interval.

### (Note 2)

The transmitter circuit according to Note 1, wherein
the synchronization pattern length determiner determines the synchronization pattern length so that the synchronization pattern length is longer as the non-communication interval increases.

### (Note 3)

The transmitter circuit according to Note 1, wherein
the synchronization pattern length determiner determines the synchronization pattern length to be a first pattern length when the length of the non-communication interval is less than a predetermined interval length, and determines the synchronization pattern length to be a second pattern length longer than the first pattern length when the length of the non-communication interval is greater than or equal to the predetermined interval length.

### (Note 4)

The transmitter circuit according to Note 3, wherein
the non-communication interval measurer measures the length of the non-communication interval by counting with the use of a clock generated at a predetermined repetition timing, sets a flag to a first predetermined value to input the flag into the synchronization pattern length determiner when the measured length of the non-communication interval is greater than or equal to the predetermined interval length, and sets the flag to a second predetermined value when the measured length of the non-communication interval is less than the predetermined interval length and
the synchronization pattern length determiner determines the synchronization pattern length based on the inputted flag.

### (Note 5)

An interface circuit for performing serial transmission between an RF (Radio Frequency) circuit and a BB (Base Band) circuit,
at least one of the RF circuit and the BB circuit provides a transmitter circuit comprising:
a non-communication interval measurer for measuring a length of a non-communication interval;
a synchronization pattern length determiner for determining a synchronization pattern length based on the length of the non-communication interval measured by the non-communication interval measurer;
a frame generator for generating a frame with a synchronization pattern of the synchronization pattern length determined by the synchronization pattern length determiner; and
a frame transmitter for transmitting the frame generated by the frame generator after the non-communication interval and
the other of the RF circuit and the BB circuit provides a receiver circuit comprising:
a frame receiver for receiving the frame transmitted by the frame transmitter;
a clock generator for generating a clock;
a clock phase adjuster for adjusting a phase of the clock based on the synchronization pattern added to the frame received by the frame receiver; and
a frame reproducer for reproducing the received frame using the clock, the phase of which has been adjusted.

### (Note 6)

The interface circuit according to Note 5, wherein
the synchronization pattern length determiner determines the synchronization pattern length so that the synchronization pattern length is longer as the non-communication interval increases.

### (Note 7)

The interface circuit according to Note 5, wherein
the synchronization pattern length determiner determines the synchronization pattern length to be a first pattern length when the length of the non-communication interval is less than a predetermined interval length, and determines the synchronization pattern length to be a second pattern length longer than the first pattern length when the length of the non-communication interval is greater than or equal to the predetermined interval length.

### (Note 8)

An information terminal comprising an RF (Radio Frequency) circuit and a BB (Base Band) circuit, wherein
at least one of the RF circuit and the BB circuit provides a transmitter circuit comprising:
a non-communication interval measurer for measuring a length of a non-communication interval;
a synchronization pattern length determiner for determining a synchronization pattern length based on the length of the non-communication interval measured by the non-communication interval measurer;
a frame generator for generating a frame with a synchronization pattern of the synchronization pattern length determined by the synchronization pattern length determiner; and
a frame transmitter for transmitting the frame generated by the frame generator after the non-communication interval, and
the other of the RF circuit and the BB circuit provides a receiver circuit comprising:
   a frame receiver for receiving the frame transmitted by the frame transmitter;
   a clock generator for generating a clock;
   a clock phase adjuster for adjusting a phase of the clock based on the synchronization pattern added to the frame received by the frame receiver; and
   a frame reproducer for reproducing the received frame using the clock, the phase of which has been adjusted.

### (Note 9)

An interface method comprising:
a non-communication interval measuring step for measuring a length of a non-communication interval;
a synchronization pattern length determining step for determining a synchronization pattern length based on the length of the non-communication interval measured at the non-communication interval measuring step;
a frame generating step for generating a frame with a synchronization pattern of the synchronization pattern length determined at the synchronization pattern length determining step;
a frame transmitting step for transmitting the frame generated at the frame generating step after the non-communication interval;
a frame receiving step for receiving the frame transmitted at the frame transmitting step;
a clock generating step for generating a clock;
a clock phase adjusting step for adjusting a phase of the clock based on the synchronization pattern added to the frame received at the frame receiving step; and
a frame reproducing step for reproducing the received frame using the clock, the phase of which has been adjusted.

### (Note 10)

A computer-readable recording medium in which a program is stored, the program causing a computer to execute:
a non-communication interval measuring procedure for measuring a length of a non-communication interval;
a synchronization pattern length determining procedure for determining a synchronization pattern length based on the length of the non-communication interval measured by the non-communication interval measuring procedure;
a frame generating procedure for generating a frame with a synchronization pattern of the synchronization pattern length determined by the synchronization pattern length determining procedure; and
a frame transmitting procedure for transmitting the frame generated by the frame generating procedure after the non-communication interval.

The present invention is based on Japanese Patent Application No. 2011-095905 filed on April 22, 2011. The entire content of Japanese Patent Application No. 2011-095905, including its specifications, claims, and drawings are incorporated herein by reference.

### Industrial Applicability

According to the present invention, it is possible to provide a transmitter circuit, an interface circuit, an information terminal, an interface method, and a recording medium which are capable of avoiding a drop in transmission efficiency without increasing power consumption.

### Reference Signs List

- 1: Information terminal
- 10: BB-IC device
- 20: RF-IC device
- 100: BB-IC interface circuit
- 200: RF-IC interface circuit
- 101, 201: Encoder (Enc)
- 102, 202: Line driver (LD)
- 103, 203: Discriminator
- 104, 204: Line receiver (LR)
- 105, 205: Clock data recovery circuit (CDR)
- 106, 206: Decoder (Dec)
- 107, 207: PLL circuit (PLL)
- 208: Oscillator (XO)
- 2031: Non-communication interval measurer
- 2032: Comparator
- 2033: Memory
- 2034: Flag setting discriminator
- 30: CPU
- 40: Amplifier
- 50: Switch circuit
- 60: Antenna

## Claims

1. A transmitter circuit comprising:
a non-communication interval measurer for measuring a length of a non-communication interval;
a synchronization pattern length determiner for determining a synchronization pattern length based on the length of the non-communication interval measured by the non-communication interval measurer;
a frame generator for generating a frame with a synchronization pattern of the synchronization pattern length determined by the synchronization pattern length determiner; and
a frame transmitter for transmitting the frame generated by the frame generator after the non-communication interval.

2. The transmitter circuit according to Claim 1, wherein
the synchronization pattern length determiner determines the synchronization pattern length so that the synchronization pattern length is longer as the non-communication interval increases.

3. The transmitter circuit according to Claim 1, wherein
the synchronization pattern length determiner determines the synchronization pattern length to be a first pattern length when the length of the non-communication interval is less than a predetermined interval length, and determines the synchronization pattern length to be a second pattern length longer than the first pattern length when the length of the non-communication interval is greater than or equal to the predetermined interval length.

4. The transmitter circuit according to Claim 3, wherein
the non-communication interval measurer measures the length of the non-communication interval by counting with the use of a clock generated at a predetermined repetition timing, sets a flag to a first predetermined value to input the flag into the synchronization pattern length determiner when measured length of the non-communication interval is greater than or equal to the predetermined interval length, and sets the flag to a second predetermined value when the measured length of the non-communication interval is less than the predetermined interval length; and
the synchronization pattern length determiner determines the synchronization pattern length based on the inputted flag.

5. An interface circuit for performing serial transmission between an RF (Radio Frequency) circuit and a BB (Base Band) circuit, wherein
at least one of the RF circuit and the BB circuit provides a transmitter circuit comprising:
a non-communication interval measurer for measuring a length of a non-communication interval;
a synchronization pattern length determiner for determining a synchronization pattern length based on the length of the non-communication interval measured by the non-communication interval measurer;
a frame generator for generating a frame with a synchronization pattern of the synchronization pattern length determined by the synchronization pattern length determiner; and
a frame transmitter for transmitting the frame generated by the frame generator after the non-communication interval, and
the other of the RF circuit and the BB circuit provides a receiver circuit comprising:
a frame receiver for receiving the frame transmitted by the frame transmitter;
a clock generator for generating a clock;
a clock phase adjuster for adjusting a phase of the clock based on the synchronization pattern added to the frame received by the frame receiver; and
a frame reproducer for reproducing the received frame using the clock, the phase of which has been adjusted.

6. The interface circuit according to Claim 5, wherein
the synchronization pattern length determiner determines the synchronization pattern length so that the synchronization pattern length is longer as the non-communication interval increases.

7. The interface circuit according to Claim 5, wherein
the synchronization pattern length determiner determines the synchronization pattern length to be a first pattern length when the length of the non-communication interval is less than a predetermined interval length, and determines the synchronization pattern length to be a second pattern length longer than the first pattern length when the length of the non-communication interval is greater than or equal to the predetermined interval length.

8. An information terminal comprising an RF (Radio Frequency) circuit and a BB (Base Band) circuit, wherein
at least one of the RF circuit and the BB circuit provides a transmitter circuit comprising:
a non-communication interval measurer for measuring a length of a non-communication interval;
a synchronization pattern length determiner for determining a synchronization pattern length based on the length of the non-communication interval measured by the non-communication interval measurer;
a frame generator for generating a frame with a synchronization pattern of the synchronization pattern length determined by the synchronization pattern length determiner; and
a frame transmitter for transmitting the frame generated by the frame generator after the non-communication interval, and
the other of the RF circuit and the BB circuit provides a receiver circuit comprising:
a frame receiver for receiving the frame transmitted by the frame transmitter;
a clock generator for generating a clock;
a clock phase adjuster for adjusting a phase of the clock based on the synchronization pattern added to the frame received by the frame receiver; and
a frame reproducer for reproducing the received frame using the clock, the phase of which has been adjusted.

9. An interface method comprising:
a non-communication interval measuring step for measuring a length of a non-communication interval;
a synchronization pattern length determining step for determining a synchronization pattern length based on the length of the non-communication interval measured at the non-communication interval measuring step;
a frame generating step for generating a frame with a synchronization pattern of the synchronization pattern length determined at the synchronization pattern length determining step;
a frame transmitting step for transmitting the frame generated at the frame generating step after the non-communication interval;
a frame receiving step for receiving the frame transmitted at the frame transmitting step;
a clock generating step for generating a clock;
a clock phase adjusting step for adjusting a phase of the clock based on the synchronization pattern added to the frame received at the frame receiving step; and
a frame reproducing step for reproducing the received frame using the clock, the phase of which has been adjusted.

10. A computer-readable recording medium in which a program is stored, the program causing a computer to execute:
a non-communication interval measuring procedure for measuring a length of a non-communication interval;
a synchronization pattern length determining procedure for determining a synchronization pattern length based on the length of the non-communication interval measured by the non-communication interval measuring procedure;
a frame generating procedure for generating a frame with a synchronization pattern of the synchronization pattern length determined by the synchronization pattern length determining procedure; and
a frame transmitting procedure for transmitting the frame generated by the frame generating procedure after the non-communication interval.

## Amended claims

### Amended claims under Art. 19.1 PCT

**1.** A transmitter circuit comprising:
a non-communication interval measurer for measuring a length of a non-communication interval;
a synchronization pattern length determiner for determining a synchronization pattern length based on the length of the non-communication interval measured by the non-communication interval measurer;
a frame generator for generating a frame with a synchronization pattern of the synchronization pattern length determined by the synchronization pattern length determiner; and
a frame transmitter for transmitting the frame generated by the frame generator after the non-communication interval.

**2.** The transmitter circuit according to Claim 1, wherein
the synchronization pattern length determiner determines the synchronization pattern length so that the synchronization pattern length is longer as the non-communication interval increases.

**3.** The transmitter circuit according to Claim 1, wherein
the synchronization pattern length determiner determines the synchronization pattern length to be a first pattern length when the length of the non-communication interval is less than a predetermined interval length, and determines the synchronization pattern length to be a second pattern length longer than the first pattern length when the length of the non-communication interval is greater than or equal to the predetermined interval length.

**4.** The transmitter circuit according to Claim 3, wherein
the non-communication interval measurer measures the length of the non-communication interval by counting with the use of a clock generated at a predetermined repetition timing, sets a flag to a first predetermined value to input the flag into the synchronization pattern length determiner when the measured length of the non-communication interval is greater than or equal to the predetermined interval length, and sets the flag to a second predetermined value when the measured length of the non-communication interval is less than the predetermined interval length; and
the synchronization pattern length determiner determines the synchronization pattern length based on the inputted flag.

**5.** An interface circuit for performing serial transmission between an RF (Radio Frequency) circuit and a BB (Base Band) circuit,
at least one of the RF circuit and the BB circuit provides a transmitter circuit comprising:
a non-communication interval measurer for measuring a length of a non-communication interval;
a synchronization pattern length determiner for determining a synchronization pattern length based on the length of the non-communication interval measured by the non-communication interval measurer;
a frame generator for generating a frame with a synchronization pattern of the synchronization pattern length determined by the synchronization pattern length determiner; and
a frame transmitter for transmitting the frame generated by the frame generator after the non-communication interval, and
the other of the RF circuit and the BB circuit provides a receiver circuit comprising:
a frame receiver for receiving the frame transmitted by the frame transmitter;
a clock generator for generating a clock;
a clock phase adjuster for adjusting a phase of the clock based on the synchronization pattern added to the frame received by the frame receiver; and
a frame reproducer for reproducing the received frame using the clock, the phase of which has been adjusted.

**6.** The interface circuit according to Claim 5, wherein
the synchronization pattern length determiner determines the synchronization pattern length so that the synchronization pattern length is longer as the non-communication interval increases.

**7.** The interface circuit according to Claim 5, wherein
the synchronization pattern length determiner determines the synchronization pattern length to be a first pattern length when the length of the non-communication interval is less than a predetermined interval length, and determines the synchronization pattern length to be a second pattern length longer than the first pattern length when the length of the non-communication interval is greater than or equal to the predetermined interval length.

**8.** An information terminal comprising an RF (Radio Frequency) circuit and a BB (Base Band) circuit, wherein
at least one of the RF circuit and the BB circuit provides a transmitter circuit comprising:
a non-communication interval measurer for measuring a length of a non-communication interval;
a synchronization pattern length determiner for determining a synchronization pattern length based on the length of the non-communication interval measured by the non-communication interval measurer;
a frame generator for generating a frame with a synchronization pattern of the synchronization pattern length determined by the synchronization pattern length determiner; and
a frame transmitter for transmitting the frame generated by the frame generator after the non-communication interval, and
the other of the RF circuit and the BB circuit provides a receiver circuit comprising:
a frame receiver for receiving the frame transmitted by the frame transmitter;
a clock generator for generating a clock;
a clock phase adjuster for adjusting a phase of the clock based on the synchronization pattern added to the frame received by the frame receiver; and
a frame reproducer for reproducing the received frame using the clock, the phase of which has been adjusted.

**9.** An interface method comprising:
a non-communication interval measuring step for measuring a length of a non-communication interval;
a synchronization pattern length determining step for determining a synchronization pattern length based on the length of the non-communication interval measured at the non-communication interval measuring step;
a frame generating step for generating a frame with a synchronization pattern of the synchronization pattern length determined at the synchronization pattern length determining step;
a frame transmitting step for transmitting the frame generated at the frame generating step after the non-communication interval;
a frame receiving step for receiving the frame transmitted at the frame transmitting step;
a clock generating step for generating a clock;
a clock phase adjusting step for adjusting a phase of the clock based on the synchronization pattern added to the frame received at the frame receiving step; and
a frame reproducing step for reproducing the received frame using the clock, the phase of which has been adjusted.

**10.** A computer-readable recording medium on which a program is stored, the program causing a computer to execute:
a non-communication interval measuring procedure for measuring a length of a non-communication interval;
a synchronization pattern length determining procedure for determining a synchronization pattern length based on the length of the non-communication interval measured by the non-communication interval measuring procedure;
a frame generating procedure for generating a frame with a synchronization pattern of the synchronization pattern length determined by the synchronization pattern length determining procedure; and
a frame transmitting procedure for transmitting the frame generated by the frame generating procedure after the non-communication interval.

**11.** (New) An information terminal comprising:
a non-communication interval measurer for measuring a length of a non-communication interval;
a synchronization pattern length determiner for determining a synchronization pattern length based on the length of the non-communication interval measured by the non-communication interval measurer synchronization pattern length determiner;
a frame generator for generating a frame with a synchronization pattern of the synchronization pattern length determined by the synchronization pattern length determiner; and
a frame transmitter for transmitting the frame generated by the frame generator after the non-communication interval.

**12.** (New) A receiving circuit comprising:
a frame receiver for receiving a frame with a synchronization pattern of a synchronization pattern length determined based on a length of a non-communication interval;
a clock generator for generating a clock;
a clock phase adjuster for adjusting a phase of the clock based on the synchronization pattern added to the frame received by the frame receiver; and
a frame reproducer for reproducing the received frame using the clock, the phase of which has been adjusted.

**13.** (New) An information terminal comprising:
a frame receiver for receiving a frame with a synchronization pattern of a synchronization pattern length determined based on a length of a non-communication interval;
a clock generator for generating a clock;
a clock phase adjuster for adjusting a phase of the clock based on the synchronization pattern added to the frame received by the frame receiver; and
a frame reproducer for reproducing the received frame using the clock, the phase of which has been adjusted.

**14.** (New) An interface method comprising:
a non-communication interval measuring procedure for measuring a length of a non-communication interval;
a synchronization pattern length determining procedure for determining a synchronization pattern length based on the length of the non-communication interval measured by the non-communication interval measuring procedure;
a frame generating procedure for generating a frame with a synchronization pattern of the synchronization pattern length determined by the synchronization pattern length determining procedure; and
a frame transmitting procedure for transmitting the frame generated by the frame generating procedure after the non-communication interval.

**15.** (New) An interface method comprising:
a frame receiving procedure for receiving a frame with a synchronization pattern of a synchronization pattern length determined based on a length of a non-communication interval;
a clock generating procedure for generating a clock;
a clock phase adjusting procedure for adjusting a phase of the clock based on the synchronization pattern added to the frame received by the frame receiving procedure; and
a frame reproducing procedure for reproducing the received frame using the clock, the phase of which has been adjusted.

**16.** (New) A computer-readable recording medium in which a program is stored, the program causing a computer to execute:
a frame receiving procedure for receiving a frame with a synchronization pattern of a synchronization pattern length determined based on a length of a non-communication interval;
a clock generating procedure for generating a clock;
a clock phase adjusting procedure for adjusting a phase of the clock based on the synchronization pattern added to the frame received by the frame receiving procedure; and
a frame reproducing procedure for reproducing the received frame using the clock, the phase of which has been adjusted.
